# EUROPEAN PATENT SPECIFICATION

(11) **EP 2 495 947 B1**
(45) Date of publication and mention of the grant of the patent: **13.11.2019**
(21) Application number: 12157972.6
(22) Date of filing: 02.03.2012
(51) Int. Cl.: H04N 1/00

(54) **Information processing apparatus, information processing system, method for controlling information processing apparatus, and program**
Informationsverarbeitungsvorrichtung, Informationsverarbeitungssystem, Verfahren zur Steuerung der Informationsverarbeitungsvorrichtung und Programm
Appareil de traitement d'informations, système de traitement d'informations, procédé de contrôle de l'appareil de traitement d'informations et programme

(30) Priority: 04.03.2011 JP 2011047911
(43) Date of publication of application: 05.09.2012
(73) Proprietor: Canon Kabushiki Kaisha, Tokyo 146-8501 (JP)
(72) Inventor: Ito, Fumitoshi, Ohta-ku, Tokyo (JP)
(74) Representative: Garner, Jonathan Charles Stapleton

(56) References cited:
- EP-A1- 1 852 748
- EP-A2- 1 143 695
- US-A1- 2006 031 398
- US-A1- 2006 077 428
- US-A1- 2008 072 170

## Description

### BACKGROUND OF THE INVENTION

### Field of the Invention

The present invention relates to an information processing apparatus and an information processing system including a web browser which receives screen data from a web server to display a screen based on the screen data.

### Description of the Related Art

An information processing apparatus, such as a personal computer (PC), including a web browser has been known to display a screen based on screen data (e.g., hypertext markup language (HTML) data) provided by a web server on a network. The screen to be displayed on the web browser of the information processing apparatus includes an operation screen for operating a web application installed in the web server.

There are some web applications which have user authentication functions. When such a web application is used, the web application first provides a web browser with HTML data including a form to which user information is input. Then, a user inputs the user information such as a user name and a password through a screen displayed on the web browser, and submits the contents of the form (input user information). Accordingly, the user authentication is performed by the web application side.

Japanese Patent Application Laid-Open No. 2007-257500 discusses a technique for mitigating time and effort to input user information through a screen to be displayed on the web browser.

According to the patent document, when a user uses a plurality of web applications, a single sign-on is implemented to solve a problem in which different user information needs to be stored for each of the web applications. In the patent document, specifically, when a user selects a script stored as a bookmark while a web browser is displaying a screen of a web application, an authentication device is accessed according to the definition of the script. The user is permitted to use the web application on condition that the user is authenticated by the authentication device. According to such authentication, the user does not need to store the different user information for each of all the web applications.

In addition, there are cases where user information is input on a screen to be displayed on a web browser for user authentication by a web application. In such a case, a user needs to input the user information repeatedly whenever the web application is used, causing extra labor.

On the other hand, there is a setting to deal with such repeat inputs. According to the setting, information that has been once input by users is distinctively stored in a web browser for each user. It is known that when a screen is displayed by the web browser, the stored user information is automatically set within the screen (autocomplete).

When such an autocomplete setting is realized by a related art method, however, the information corresponding to all the users needs to be stored in the web browser, causing consumption of a memory resource of an information processing apparatus. Moreover, in a usage environment in which the same user uses a plurality of information processing apparatuses, there is a problem that the user needs to store user information thereof in web browsers of the respective information processing apparatuses.

According to the Japanese Patent Application Laid-Open No. 2007-257500, therefore, the user information needs to be input whenever the web application is used. Moreover, the user needs to manually select the script stored as a bookmark, causing extra labor.

US 2006/0077428 discloses an imaging device, which receives menu data from a remote computing device (RCD) and displays a user interface based on the menu data. The imaging device receives a user's input via the displayed user interface and sends the received user's input to the RCD. The RCD can then process data based on the user's input.

EP 1143695 discloses a web client included in a host computer that displays a web page provided by an image processing apparatus.

EP 1852748 describes an MFP in which an MFP browser comprehends display information in an HTML file and a script is provided for controlling functions using specific hardware of the MFP device.

US2006031398 discloses an apparatus for managing data on a web page, through a web browser at a client device via a network, including a receiving unit that receives a request from the client device to start a client application installed in the client device, where the client application is specified by a user on the web page, a reading unit that reads, from a memory, a startup procedure for starting the client application, when the request is received, and a transmitting unit that transmits the startup procedure to the client device.

US2008072170 discloses a system and method for utilizing a drag and drop technique to complete electronic forms. A document browser computer accesses one or more electronic forms provided by a document server via an active Internet browser application window. A URL link to a fill server is established and a separate application window is created on the document browser display. A user ID, password and signature of the electronic form are passed from the document browser computer to the fill server. The fill server creates a fill bundle including shippable code corresponding to a merger of raw user data from a user profile and a form map derived from the electronic form signature. The fill bundle is returned to the document browser computer and presented on the browser computer's display as an icon within the open fill bundle window. The fill bundle icon is selected and dragged from the fill bundle window to an electronic form application window causing the shippable code to be executed. Accordingly, one or more fields are completed and the form may be submitted to the requesting provider.

### SUMMARY OF THE INVENTION

The present invention is directed to a configuration capable of reducing labor of a user to input information with respect to a screen displayed on a web browser.

The present invention in its first aspect provides an information processing apparatus as specified in claims 1 to 5.

The present invention in its second aspect provides an information processing system as specified in claim 6.

The present invention in its third aspect provides a method as specified in claims 7.

The present invention in its forth aspect provides a program as specified in claims 8.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 is a general view illustrating an information processing system according to an exemplary embodiment of the present invention.
Fig. 2 is a block diagram illustrating a configuration of a multifunctional peripheral (MFP) according to the exemplary embodiment of the present invention.
Fig. 3 is a block diagram illustrating a configuration of a web server according to the exemplary embodiment of the present invention.
Fig. 4 is a diagram illustrating a software configuration of the MFP according to the exemplary embodiment of the present invention.
Fig. 5 is a diagram illustrating a uniform resource locator (URL) management table according to the exemplary embodiment of the present invention.
Fig. 6 is a diagram illustrating a software configuration of a form data management server according to the exemplary embodiment of the present invention.
Fig. 7 is a diagram illustrating a form data management table according to the exemplary embodiment of the present invention.
Fig. 8 is a diagram illustrating a software configuration of a web server according to the exemplary embodiment of the present invention.
Fig. 9 is a flowchart illustrating an operation of a web browser monitoring unit according to the exemplary embodiment of the present invention.
Fig. 10 is a sequence diagram illustrating entire operations of the information processing system according to the exemplary embodiment of the present invention.
Fig. 11 is a diagram illustrating a screen of the MFP according to the exemplary embodiment of the present invention.
Fig. 12 is a diagram illustrating an example of HTML data provided as a response by a web application according to the exemplary embodiment of the present invention.
Fig. 13 is a diagram illustrating a screen of the MFP according to the exemplary embodiment of the present invention.
Fig. 14 is a diagram illustrating an example script that is provided when the web browser monitoring unit instructs the web browser to perform loading according to the exemplary embodiment of the present invention.
Fig. 15 is a diagram illustrating an example script provided as a response by a script response unit according to the exemplary embodiment of the present invention.
Fig. 16 is a diagram illustrating a screen of the MFP according to the exemplary embodiment of the present invention.
Fig. 17 is a sequence diagram illustrating entire operations of the information processing system according to the exemplary embodiment of the present invention.

### DESCRIPTION OF THE EMBODIMENTS

Various exemplary embodiments, features, and aspects of the invention will be described in detail below with reference to the drawings.

Although particular exemplary embodiments of the present invention are described below, the present invention is not limited thereto and it must be understood that all the combinations of features described in the exemplary embodiments may not necessarily be essential to solution provided by the present invention.

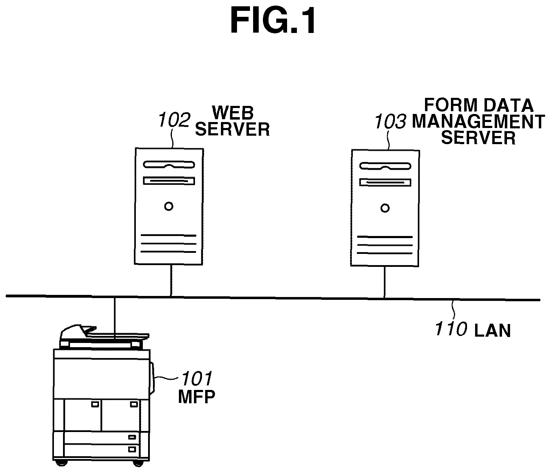

Fig. 1 is a general view illustrating an information processing system according to an exemplary embodiment. The information processing system includes an MFP 101 serving as an example of an information processing apparatus, a web server 102, and a form data management server 103 serving as an example of an external apparatus. The MFP 101, the web server 102, and the form data management server 103 can communicate with one another through a local area network (LAN) 110. Alternatively, an additional apparatus may be connected to the LAN 110 (on network) to constitute a part of the information processing system.

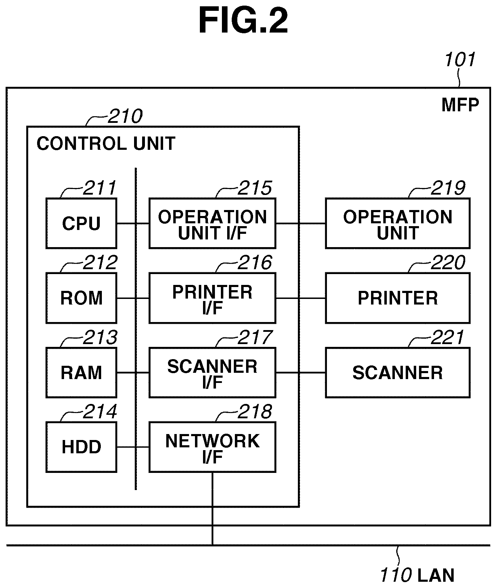

Fig. 2 is a block diagram illustrating a configuration of the MFP 101. A control unit 210 including a central processing unit (CPU) 211 controls the entire operations of the MFP 101. The CPU 211 reads control programs stored in a read only memory (ROM) 212 and performs various controls such as reading control and transmission control. Thus, the MFP 101 can provide various services such as copying, scanning (transmitting), and printing. A random access memory (RAM) 213 serves as a main memory or a temporary storage region such as a work area of the CPU 211.

A hard disk drive (HDD) 214 stores therein image data and various programs. An operation unit interface (I/F) 215 connects an operation unit 219 with the control unit 210. The operation unit 219 includes a liquid crystal display unit having a touch panel function or a keyboard. A printer I/F 216 connects a printer 220 with the control unit 210. Image data to be printed by the printer 220 is transferred from the control unit 210 through the printer I/F 216, and is printed on a recording medium by the printer 220. A scanner I/F 217 connects a scanner 221 and the control unit 210. The scanner 221 reads an image on an original document to generate image data, and inputs the image data to the control unit 210 through the scanner I/F 217. A network I/F 218 connects the control unit 210 (MFP101) to the LAN 110. The network I/F 218 controls communications with apparatuses on the LAN 110 (e.g., web server 102, and form data management server 103).

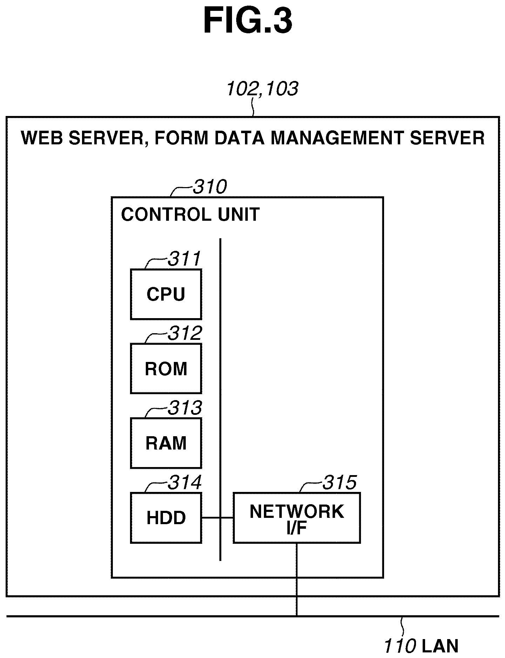

Fig. 3 is a block diagram illustrating a configuration of the web server 102. The configuration of the form data management server 103 is substantially similar to the web server 102. A control unit 310 including a CPU 311 controls the entire operations of the web server 102. The CPU 311 reads control programs stored in a ROM 312 and executes various control operations. A RAM 313 serves as a main memory or a temporary storage region such as a work area of the CPU 311. A HDD 314 stores therein image data and various programs. A network I/F 315 connects the control unit 310 (web server 102) to the LAN 110. The network I/F 315 transmits and receives various information to and from other apparatuses on the LAN 110.

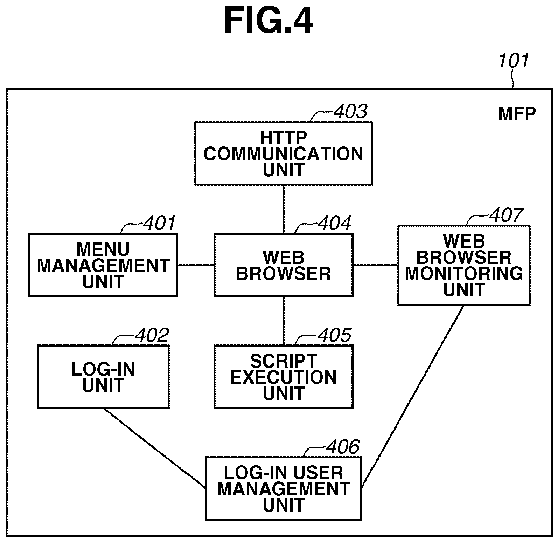

Fig. 4 illustrates a software configuration of the MFP 101. The CPU 211 of the MFP 101 executes the program stored in the HDD 214, so that each of functional units illustrated in Fig. 4 are implemented. The MFP 101 includes various functional units in addition to the functional units illustrated. A menu management unit 401 serves as a functional unit for allowing a menu screen to be displayed, the menu screen being used to activate each soft module (functional unit) of the MFP 101. For example, the menu management unit 401 displays a list of graphical user interface (GUI) buttons, the GUI button being used to instruct a display of a copy screen or a web browser screen. Moreover, the menu management unit 401 activates a software module (functional unit) corresponding to a button pressed by a user. A log-in unit 402 receives an input of user information from a user when the user begins to use the MFP 101, and performs user authentication so that the user to operate the MFP 101 is identified.

Herein, the input of the user information is received by a screen which is displayed based on the image data stored in the MFP 101, namely, not a screen of the web browser which is described later. Amethod for inputting the user information includes, for example, a method by which a user types in user information on a software keyboard displayed on the operation unit 219 or a method by which user information stored in an integrated circuit (IC) card is read and input. The log-in unit 402 collates the user information. Alternatively, a management server for managing database of user information may be disposed outside to collate the user information by the management server side. The log-in unit 402 permits a user to use the MFP 101 when the user is successfully authenticated.

A hypertext transfer protocol (HTTP) communication unit 403 controls the network I/F 218 to execute communications according to an HTTP. A web browser 404 communicates with the web server 102 through the HTTP communication unit 403. The web browser 404 uses a URL designated by a user through the operation unit 219 to request HTML data corresponding to the URL from a web application installed in the web server 102. The web browser 404 receives the HTML data transmitted from the web application as a response to the request, and allows the operation unit 219 to display a screen based on the received HTML data. A script execution unit 405 interprets the script (e.g., Java (trademark) script) read by the web browser 404, thereby operating contents to be displayed on the web browser 404 or executing communications by the HTTP communication unit 403.

A log-in user management unit 406 manages user information such as a user name and a mail address of a user (user authenticated by log-in unit 402) who has been logging in to the MFP 101. The log-in user management unit 406 also manages functions of the MFP 101, the functions being usable by each of the users authenticated by the log-in unit 402. Accordingly, the log-in user management unit 406 can determine whether each function is usable (executable) depending on an authenticated user. In the exemplary embodiment, the log-in user management unit 406 determines whether an autocomplete function of the web browser is usable with respect to each authenticated user.

A web browser monitoring unit 407 monitors operations of the web browser 404. Specifically, the web browser monitoring unit 407 determines the URL used by the web browser 404 to receive the HTML data from the log-in unit 402, whether loading of the HTML data by the web browser 404 has been completed, or whether a display of the screen based on the received HTML data has been completed.

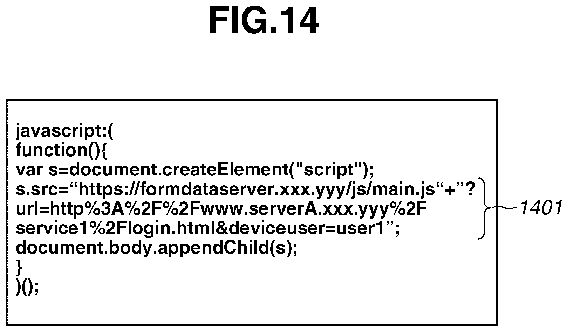

Moreover, the web browser monitoring unit 407 stores therein a script (described later with reference to Fig. 14) beforehand, and automatically instructs the web browser 404 to load the script therefrom in responding to the operation of the web browser 404. In the exemplary embodiment, assume that the web browser monitoring unit 407 instructs the web browser 404 to load the script when the URL used by the web browser 404 to receive the HTML data is a specific URL.

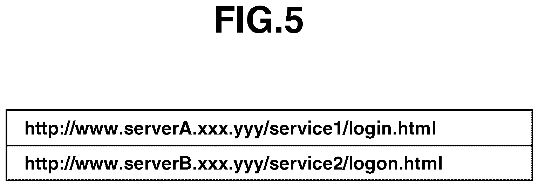

Fig. 5 illustrates a URL management table stored in the web browser monitoring unit 407. The web browser monitoring unit 407 instructs the web browser 404 to load a script on condition that the web browser 404 has received the HTML data by using a URL that matches the URL included in the URL management table. The URL management table may manage URLs individually or manages URLs on a domain unit basis. In addition, the URL to be managed by the URL management table may be registered by a user through the operation unit 219 or registered based on an instruction from outside through the LAN 110.

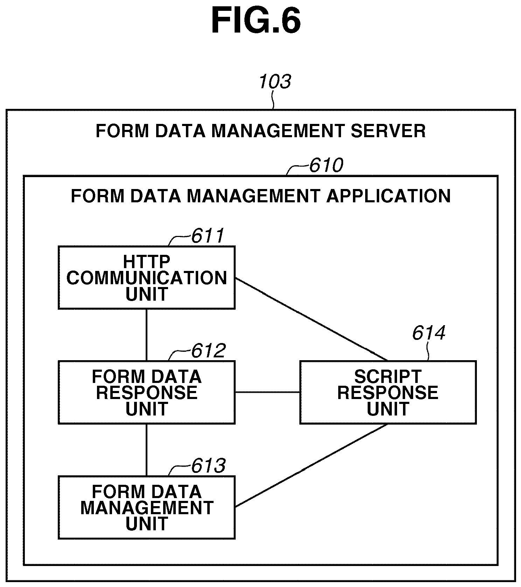

Fig. 6 illustrates a software configuration of the form data management server 103. The CPU 311 of the form data management server 103 executes the program stored in the HDD 314, so that each of functional units illustrated in Fig. 6 is implemented. The form data management server 103 includes various functional units in addition to the functional units illustrated. Assume that the form data management server 103 can be accessed using a domain name of "formdataserver.xxx.yyy".

A form data management application 610 provides form data or a script in response to a request from an apparatus on the LAN 110. An HTTP communication unit 611 receives an HTTP request through the LAN 110, and transmits information received from a form data response unit 612 or a script response unit 614 as an HTTP response.

The form data response unit 612 performs a process relating to the form data in response to a request received from outside through the HTTP communication unit 611. Specifically, when the URL of "https://formdataserver.xxx.yyy/loadService" is accessed, the form data response unit 612 responds to the request with the form data stored in the form data management table. Moreover, the form data response unit 612 stores the form data anew in the form data management table when the URL of "https://formdataserver.xxx.yyy/saveService" is accessed.

The script response unit 614 performs processing to respond with a script in response to a request received from outside through the HTTP communication unit 611. Specifically, the script response unit 614 responds to a request with the script stored beforehand therein when the URL of "https://formdataserver.xxx.yyy/js/main.js" is accessed.

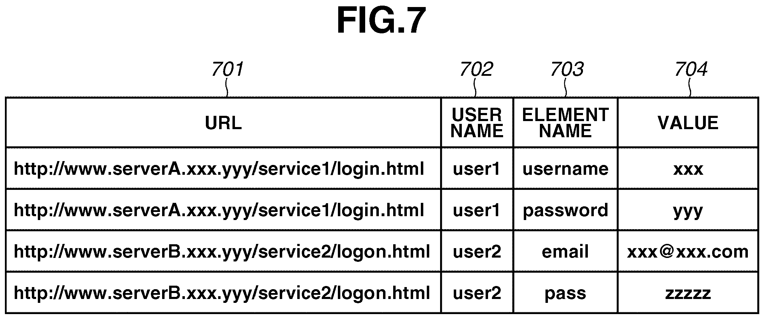

Fig. 7 illustrates the form data management table stored in a form data management unit 613. In a column 701, URLs to be used by the web browser 404 of the MFP101 to receive the HTML data are stored. The form data is managed distinctively for each web applications to be accessed by the web browser 404 of the MFP 101 by URLs.

In a column 702, user names of the users (to be authenticated by log-in unit 402) to log in to the MFP 101 are stored. The form data is managed distinctively for each user in the column 702 to operate the MFP 101 by the user names. In a column 703, element names of forms included in the HTML data to be received by the web browser 404 of the MFP 101 are stored. The form data is managed distinctively for each types of forms included in the HTML data to be received by the web browser 404 of the MFP 101 by the element names. A column 704 includes values to be input to respective forms included in the HTML data to be received by the web browser 404 of the MFP 101.

With reference to Fig. 7, a description is given of an example case where a user having the user name of "user1" logs in to the MFP 101, and HTML data is received using the URL of "http://www.serverA.xxx.yyy.service1/login.html". In such a case, the web browser 404 is provided with a response including an element name of "username" and a value of "xxx" stored in a first row, and an element name of "password" and a value of "yyy" stored in a second row in the table in Fig. 7. The web browser 404 sets a value of "xxx" with respect to a form having the element name of "username" included in the HTML data. Moreover, the web browser 404 sets a value of "yyy" with respect to a form having the element name of "password" included in the HTML data. A series of such processes can save labor of a user operating the MFP 101 to manually input a value of "xxx".

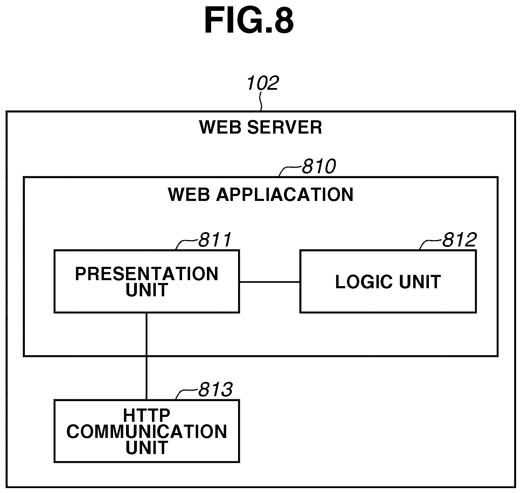

Fig. 8 illustrates a software configuration of the web server 102. Each of functional units functions when the CPU 311 of the web server 102 executes the program stored in the HDD 314 of the web server 102. A web application 810 transmits HTML data for displaying a user information input screen from which user information used to authenticate a user is input, the HTML data being transmitted as a response to a request from the web browser 404 of the MFP 101. Such HTML data includes above described forms. The web application 810 also transmits HTML data for displaying a screen that receives an instruction from a user to the MFP 101, or an instruction to the MFP 101 to execute an image processing.

A presentation unit 811 provides the web browser 404 of the MFP 101 with HTML data through an HTTP communication unit 813. Moreover, the presentation unit 811 receives the form data transmitted from the web browser 404 through the HTTP communication unit 813.

A logic unit 812 performs a processing relating to the form data received through the presentation unit 811. In the exemplary embodiment, the logic unit 812 performs a process relating to user information (which is manually input by user on screen displayed on web browser 404 or input by using autocomplete function) transmitted from the web browser 404 as form data. This processing includes, for example, collation of the user information with the user information managed in data base beforehand, and permission for the usage of the web application 810 when the information matches each other based on the collation. When the logic unit 812 permits the usage of the web application 810, HTML data for displaying an operation screen of the web application 810 is provided as a response to the web browser 404.

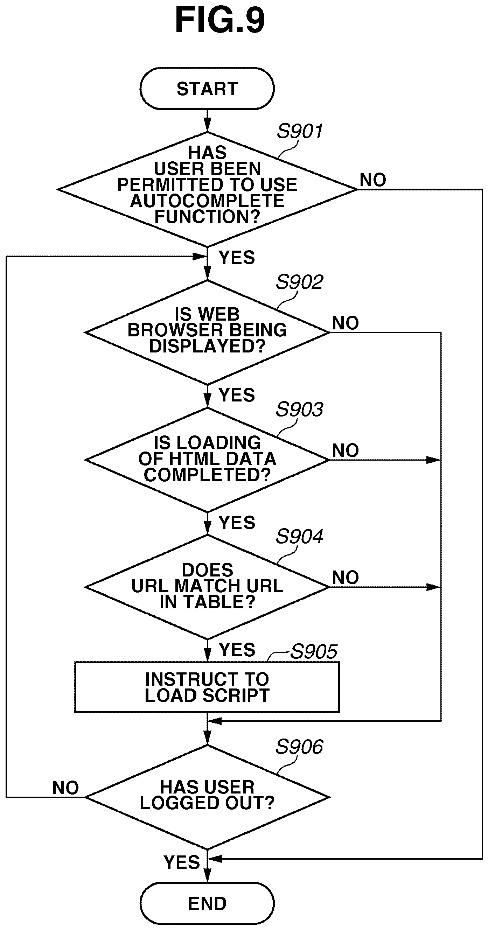

Fig. 9 is a flowchart illustrating operations of the web browser monitoring unit 407 which monitors loading of HTML data (display of screen) in the web browser 404 and instructs the web browser 404 to load a script in the MFP 101. The flowchart in Fig. 9 is executed when a user is successfully authenticated by the log-in unit 402 and then begins to use the MFP 101. Each of the operations (steps) in the flowchart in Fig. 9 is performed by executing a control program stored in the HDD 214 by the CPU 211 of the MFP 101.

In step S901, the web browser monitoring unit 407 makes an inquiry to the log-in user management unit 406, and determines whether the user currently operating the MFP 101 has been permitted to use an autocomplete function. If the user has been permitted to use the autocomplete function (YES in step S901), the operation proceeds to step S902. If the user has not been permitted to use the autocomplete function (NO in step S901), on the other hand, the operation ends.

In step S902, the web browser monitoring unit 407 determines whether the web browser 404 is being displayed on the operation unit 219. The determination may be performed based on whether the web browser 404 is being activated, or the web browser 404 is being displayed on the topmost screen of the operation unit 219. If the web browser 404 is being displayed (YES in step S902) according to the result of the determination, the operation proceeds to step S903. On the other hand, if the web browser 404 is not being displayed (NO in step S902), the operation proceeds to step S906.

In step S903, the web browser monitoring unit 407 determines whether loading of the HTML data (display of screen) by the web browser 404 has been completed. Herein, the web browser 404 actively notifies the web browser monitoring unit 407 of completion of the HTML data loading. Alternatively, the web browser monitoring unit 407 may make an inquiry to the web browser 404 with periodic polling. If the loading of the HTML data is completed (YES in step S903) according to the result of the determination, the operation proceeds to step S904. If the loading of the HTML data is not completed (NO in step S903), on the other hand, the operation proceeds to step S906.

In step S904, the web browser monitoring unit 407 determines whether the URL used to receive the HTML data being currently loaded on the web browser 404 matches the URL included in the URL management table in Fig. 5. If the URL matches the URL in the table (YES in step S904) according to the result of the determination, the operation proceeds to step S905. If the URL does not matches the URL in the table (NO in step S904), the operation proceeds to step S906. Herein, the case where the URL matches the URL in the table indicates that a screen displayed on the web browser is an information input screen (user information input screen) for receiving an input of information from a user.

In step S905, the web browser monitoring unit 407 instructs the web browser 404 to load a script stored therein such that an autocomplete process is performed. In step S906, the web browser monitoring unit 407 determines whether the user has logged out from the MFP 101. If the user has logged out (YES in step S906), the operation ends. If the user has not logged out (NO in step S906), the operation returns to step S902.

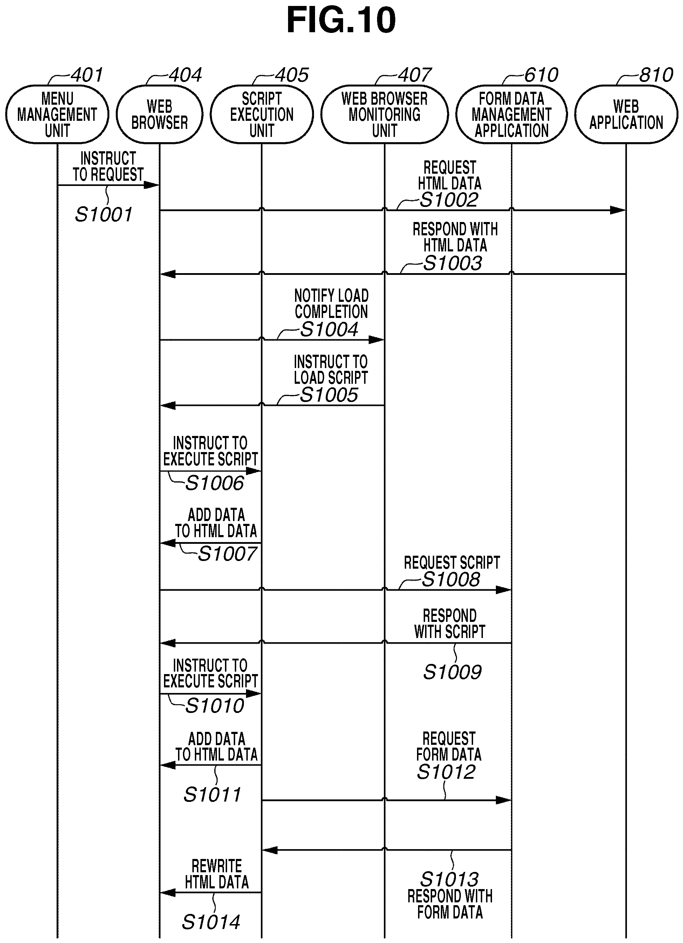

Fig. 10 illustrates entire sequence of an autocomplete processing according to the exemplary embodiment. When a user logs in to the MFP 101 (assume that user has user name of "user1" and is permitted to use autocomplete), a menu screen is first displayed by the menu management unit 401.

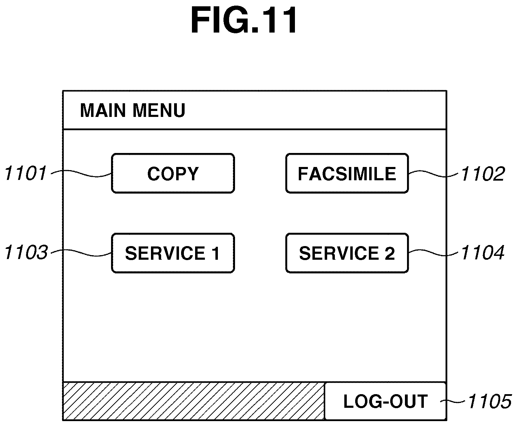

Fig. 11 illustrates the menu screen to be displayed by the menu management unit 401. In the menu screen, a GUI button 1101 and a GUI button 1102 are displayed. The GUI button 1101 serves to instruct the use of a copy application, whereas the GUI button 1102 serves to instruct the use of a facsimile application. In addition, the copy application and facsimile application are installed inside the MFP 101, and the web browser 404 is not used while any of these applications is used.

Each of GUI buttons 1103 and 1104 serves to instruct the use of a web application installed in the web server 102 on the LAN 110. The GUI buttons 1103 and 1104 have different URLs allocated thereto. Herein, assume that the URL corresponding to the web application 810 is allocated to the GUI button 1103.

When the GUI button 1103 is pressed, then in step S1001, the menu management unit 401 starts the web browser 404 and controls such that the web browser 404 is displayed on the topmost screen of the operation unit 219. Moreover, the menu management unit 401 instructs the web browser 404 to request the web application 810 to provide the HTML data by using the URL allocated to the GUI button 1103.

In step S1002, the web browser 404 requests the HTML data from the web application 810 according to the instruction from the menu management unit 401. In step S1003, the web application 810 responds to the request with the HTML data for displaying a user information input screen which receives an input of the user information to be used to authenticate a user.

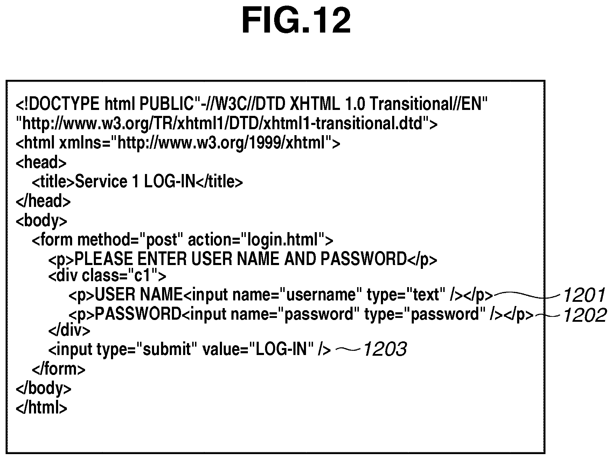

Fig. 12 illustrates the HTML data to be provided as a response by the web application 810 in step S1003. In the exemplary embodiment, screen data is written in an HTML format, but descriptions of a style sheet setting and other settings are omitted for the sake of simplicity. An input tag 1201 serves as an element that allows a user name to be input. An input tag 1202 serves as an element that allows a password to be input. An input tag 1203 serves as an element that allows information (herein, user information) which has been input into a form to be submitted.

When the web browser 404 loads the HTML data received from the web application 810 and completes a display of the screen, then in step S1004, the web browser 404 notifies the web browser monitoring unit 407 of completion of loading.

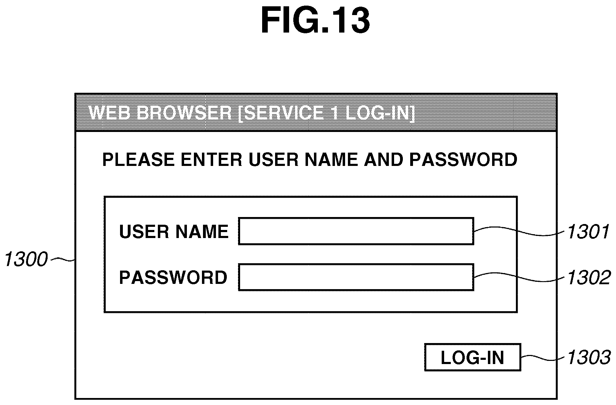

Fig. 13 illustrates a screen to be displayed on the web browser 404 based on the HTML data illustrated in Fig. 12. A GUI screen 1300 displays thereon a text box control 1301 based on the input tag 1201 and a password control 1302 based on the input tag 1202. The text box control 1301 receives an input of a user name, whereas the password control 1302 receives an input of a password. Moreover, the GUI screen 1300 also displays thereon a submission button 1303 based on the input tag 1203. In step S1005, the web browser monitoring unit 407 instructs the web browser 404 to load a script. This processing corresponds to the processing in step S905 in Fig. 9.

Fig. 14 illustrates an example script that is provided when the web browser monitoring unit 407 instructs the web browser 404 to perform loading. In the script in Fig. 14, lines are fed for sake of simplicity of description. An actual script is a character string without line feed or space. The script illustrated in Fig. 14 defines that an URL 1401 is added to HTML data (rewrite screen data) as an external script. The URL 1401 is combination of "an URL of the script response unit 614" with "an URL used to receive the HTML data being currently loaded on the web browser 404" and "a user name of the user who is currently logging in to the MFP 101" as query.

The "URL of the script response unit 614" is stored in the web browser monitoring unit 407 beforehand as information. Each of the "URL used to receive the HTML data being currently loaded on the web browser 404" and the "user name of the user who is currently logging in to the MFP 101" is determined dynamically as information according to a state of the MFP 101. Alternatively, the script illustrated Fig. 14 may have additional description so as not to allow the same script to be loaded twice or more to the same HTML data.

In step S1006, the web browser 404 instructs the script execution unit 405 to execute the script loaded from the web browser monitoring unit 407. According to the instruction, the script execution unit 405 executes the scripts illustrated in Fig. 14.

Since the rewrite of the HTML data is defined in the script illustrated in Fig. 14, in step S1007, the URL 1401 is added to the HTML data being loaded on the web browser as a result of execution of the script by the script execution unit 405.

In step S1008, the web browser 404 requests a script (second script) to the form data management application 610 according to the script tag added in step S1007. As illustrated in the URL 1401, this request includes the "URL used to receive the HTML data being currently loaded on the web browser 404" and the "user name of the user who is currently logging in to the MFP 101".

In step S1009, the script response unit 614 of the form data management application 610 responds to the web browser 404 with the script. Herein, the script response unit 614 accesses the form data management table stored in the form data management unit 613, and determines the row corresponding to the "URL" and the "user name" included in the query string.

The script response unit 614 allows the form data management unit 613 to issue identification (ID) for accessing the determined row. Herein, assume that "0123456789" is issued as ID. The form data included in the form data management table can be acquired by using the ID. However, the ID becomes invalid if an access to the form data management table is not made for a predetermined time or longer.

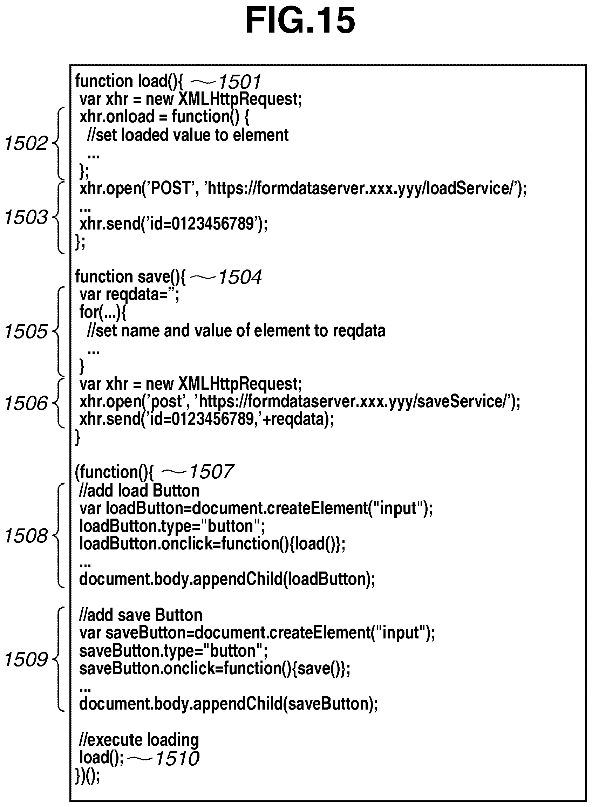

Fig. 15 illustrates example scripts that are provided by the script response unit 614 as responses. A function 1501 requests form data for autocomplete process from the form data management application 610, and sets a value to an element included in the HTML data loaded on the web browser 404.

A script 1502 sets the form data acquired from the form data management application 610 to the element included in the HTML data being loaded on the web browser 404. A script 1503 requests form data from a form data acquisition service of the script response unit 614, the form data acquisition service having a ULR of "https://formdataserver.xxx.yyy/loadService". The request includes the ID "0123456789" issued beforehand by the form data management unit 613.

A function 1504 allows form data to which a user inputs information (herein, user information) through a displayed screen on the web browser 404 to be transmitted to and stored in the form data management application 610. A script 1505 reads an element name and a value from a form included in HTML data and then sets the element name and the value to a variable of "reqdata".

A script 1506 requests the form data storage service of the script response unit 614 to store the "reqdata", the form data storage service having a URL of "https://formdataserver.xxx.yyy/saveService". The request includes the ID "0123456789" issued beforehand by the form data management unit 613. A function 1507 is automatically executed when a script in Fig. 15 is read.

A script 1508 adds a display object (button) for invoking the function 1501 to the HTML data being loaded on the web browser 404. A script 1509 adds a display object (button) for invoking the function 1504 to the HTML data being loaded on the web browser 404. A script 1510 invokes the function 1501.

In step S1010, the web browser 404 instructs the script execution unit 405 to execute the script provided as a response by the form data management application 610. The script execution unit 405 executes the script in Fig. 15 according to the instruction.

In step S1011, the script execution unit 405 executes the scripts 1508 and 1509, thereby adding the data for displaying the GUI button to the HTML data being loaded on the web browser 404. Subsequently, the script execution unit 405 invokes the function 1501 by executing the script 1510, and then executes the script 1503.

In step S1012, the script execution unit 405 requests the form data from the form data management application 610 as a result of the execution of the script 1503. In step S1013, upon receipt of the request, the form data management application 610 allows the form data response unit 612 to respond to the request with the form data corresponding to the ID included in the request out of the form data included in the form data table.

In Fig. 7, for example, the form data management application 610 responds to the request with element names and values ("username", "xxx", "password", and "yyy") which match two keys of "http://www.serverA.xxx.yyy./servicel/login.html" and "user1".

Upon receipt of the response from the form data management application 610, the script execution unit 405 executes the script 1502. In step S1014, the script execution unit 405 rewrites HTML data as a result of the execution of the script 1502 so that the form data acquired from the form data management application 610 is set to the HTML data being loaded by the web browser 404.

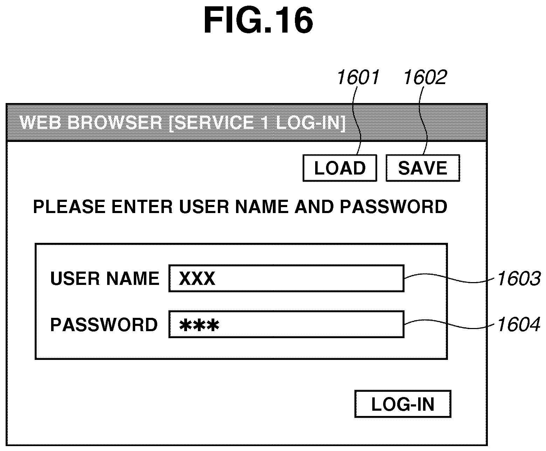

Fig. 16 illustrates a screen to be displayed on the web browser 404 as a result of the processes in steps S1011 and S1014. A GUI button 1601 and a GUI button 1602 are display objects that are added by rewriting the HTML data in step S1011. As illustrated in Fig. 16, a user name and a password are autocompleted (preset) in a text box control 1603 and a password control 1604 respectively as a result of the process in step S1014. For the password control 1604, a value "yyy" is actually set. However, since the value "yyy" serves as a password, a value "***" is displayed on a screen.

In a case where a user accidentally changes the contents of user information in the text box control 1603 and the password control 1604 from the autocompleted state in Fig. 16, the autocomplete process can be re-executed by pressing the GUI button 1601. When the user presses the GUI button 1601, the web browser 404 invokes the script execution unit 405 to execute the function 1501.

Next, a description is given of a process for newly storing user information to the form data management application 610 for a future log-in process, the user information having been manually input by a user on a screen displayed by the web browser 404.

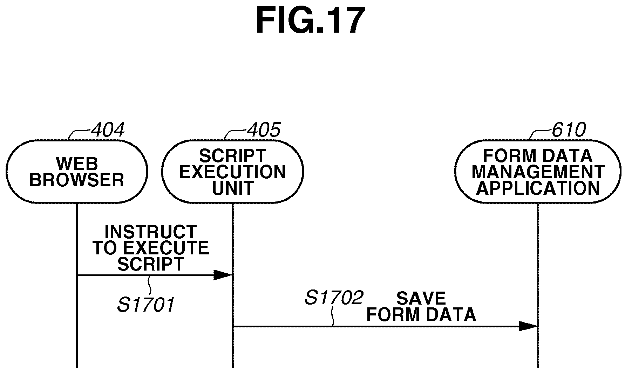

Fig. 17 illustrates the entire sequence of a form data storing processing according to the exemplary embodiment. The sequence in Fig. 17 starts when a user manually inputs information and then presses the GUI button 1602 on the screen in Fig. 16 being displayed by the web browser 404.

In step S1701, the web browser 404 instructs the script execution unit 405 to execute the script 1504 in Fig. 15. In step S1702, the script execution unit 405 requests the form data management application 610 to store the form data as a result of execution of the script 1504. This request includes an element name and a value of the form and an ID which has been issued beforehand. The form data management application 610 updates the contents of the form data management table in response to the request from the script execution unit 405.

According to the exemplary embodiment of the the present invention, therefore, when HTML data using a specific URL is received (and screen is displayed), form data managed in the form data management application 610 on the outside is autocompleted. Accordingly, for example, a user can save labor in inputting user information which needs to be input on a user information input screen to log in to the web application 810.

The exemplary embodiment has been described with a case where user information to be used for user authentication is autocompleted. However, the information to be autocompleted is not limited thereto. For example, a search keyword or a standard greeting phrase may be autocompleted. The target for the autocomplete is not limited to the keyword, the autocomplete may be applied to selection of an item from a pull-down menu or an input of check mark in a checkbox.

Moreover, the script execution unit 405 and the web browser 404 communicate with the form data management application 610 in steps S1008, S1009, S1012, and S1013 in Fig. 10. However, the communications may be performed with the web browser monitoring unit 407 as an intermediation. In this case, it is advantageous since the side of the form data management application 610 may correspond to a communication protocol other than HTTP.

Moreover, the exemplary embodiment has been described with a case where the script in Fig. 14 is stored in the web browser monitoring unit 407. Alternatively, the script may be stored as a bookmark in the web browser 404. In this case, the web browser monitoring unit 407 specifies a bookmark ID, and then the web browser 404 loads bookmark information (script in Fig. 14) corresponding to the specified bookmark ID in the script load instruction in step S1005 in Fig. 10.

### Other Embodiments

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium) . In such a case, the system or apparatus, and the recording medium where the program is stored, are included as being within the scope of the present invention.

While the present invention has been described with reference to exemplary embodiments, it is to be understood that the invention is not limited to the disclosed exemplary embodiments. The scope of the following claims is to be accorded the broadest interpretation.

## Claims

1. An information processing apparatus (101) comprising:
a connection means (218) for connecting to a network (110) ;
a web browser (404) configured to receive screen data from a web server (102) on the network and display a screen based on the screen data;
a storage means (214) for storing a script used to acquire user information stored in an external apparatus (103) on the network;
**characterised by**:
a determination means (211) including a URL management table for determining whether the screen to be displayed by the web browser (404) is an information input screen for receiving an input of information from a user to be used for user authentication, wherein the determination means is configured to instruct the web browser to load a script on condition that screen data received from the web server uses a URL that matches a URL included in the URL management table; and
an execution means (405) for executing the script stored in the storage means in response to a determination by the determination means that the screen to be displayed by the web browser (404) is the information input screen
wherein the script stored in the storage means (214) is configured to acquire a second script stored in the external apparatus, the second script being configured to request the user information from the external apparatus for an autocomplete process and to set the user information to an element included in the screen data displayed by the web browser.

2. An information processing apparatus (101) according to claim 1, wherein the storage means (214) stores the script used to acquire the user information stored in the external apparatus (103) as a bookmark of the web browser (404).

3. An information processing apparatus (101) according to claim 1 or claim 2, wherein the second script is configured to add a display object to the information input screen.

4. An information processing apparatus (101) according to any preceding claim, wherein the second script is configured to store information input by the user with respect to the information input screen to the external apparatus (103).

5. An information processing apparatus (101) according to any preceding claim, further comprising a second determination means for determining whether the script stored in the storage means (214) is executed depending on the user who is operating the information processing apparatus.

6. An information processing system including an information processing apparatus (101) according to any preceding claim and an external apparatus.

7. A method for controlling an information processing apparatus (101) including a connection means (218) for connecting to a network (110), a web browser (404) configured to receive screen data from a web server (102) on the network and to display a screen based on the screen data, and a storage means (214) for storing a script used to acquire user information stored in an external apparatus (103) on the network; the method **characterized by**:
determining, by use of a URL management table, whether the screen to be displayed by the web browser (404) is an information input screen for receiving an input of information from a user to be used for user authentication, and instructing the loading of a script on a condition that screen data received from the web server uses a URL that matches a URL included in the URL management table;
executing the script stored in the storage means (214) in response to determination in which the screen to be displayed by the web browser (404) is the information input screen as a result of the determination, the script acquiring a second script stored in the external apparatus, and the second script requesting user information from the external apparatus for an autocomplete process and setting the user information to an element included in the screen data displayed by the web browser.

8. A computer program comprising instructions to cause the information processing apparatus of claim 1 to execute the controlling method of claim 7.

## Patentansprüche

1. Informationsverarbeitungsvorrichtung (101), umfassend:
eine Verbindungseinrichtung (218) zum Verbinden mit einem Netz (110);
einen Webbrowser (404), der konfiguriert ist, Bildschirmdaten von einem Webserver (102) im Netz zu empfangen und basierend auf den Bildschirmdaten einen Bildschirm anzuzeigen;
eine Speichereinrichtung (214) zum Speichern eines Skripts, das verwendet wird zum Erfassen von in einer externen Vorrichtung (103) gespeicherter Nutzerinformation im Netz;
**gekennzeichnet durch**:
eine Bestimmungseinrichtung (211) einschließlich einer URL-Verwaltungstabelle zum Bestimmen, ob der durch den Webbrowser (404) anzuzeigende Bildschirm ein Informationseingabebildschirm zum Empfangen einer Informationseingabe von einem Benutzer ist, die zur Benutzerauthentifizierung zu verwenden ist, wobei die Bestimmungseinrichtung konfiguriert ist, den Webbrowser zum Laden eines Skripts anzuweisen unter der Bedingung, dass vom Webserver empfangene Bildschirmdaten eine URL verwenden, die zu einer in der URL-Verwaltungstabelle enthaltenen URL passt; und
eine Ausführungseinrichtung (405) zum Ausführen des in der Speichereinrichtung gespeicherten Skripts ansprechend auf eine Bestimmung durch die Bestimmungseinrichtung, dass der durch den Webbrowser (404) anzuzeigende Bildschirm der Informationseingabebildschirm ist,
wobei das in der Speichereinrichtung (214) gespeicherte Skript konfiguriert ist, ein in der externen Vorrichtung gespeichertes zweites Skript zu erfassen, und wobei das zweite Skript konfiguriert ist, für eine Autovervollständigen-Verarbeitung die Benutzerinformation von der externen Vorrichtung anzufordern und die Benutzerinformation auf ein Element einzustellen, das in den durch den Webbrowser angezeigten Bildschirmdaten enthalten ist.

2. Informationsverarbeitungsvorrichtung (101) nach Anspruch 1, wobei die Speichereinrichtung (214) das Skript, das zum Erfassen der in der externen Vorrichtung (103) gespeicherten Benutzerinformation verwendet wird, als ein Lesezeichen des Webbrowsers (404) speichert.

3. Informationsverarbeitungsvorrichtung (101) nach Anspruch 1 oder Anspruch 2, wobei das zweite Skript konfiguriert ist, dem Informationseingabebildschirm ein Anzeigeobjekt hinzuzufügen.

4. Informationsverarbeitungsvorrichtung (101) nach einem der vorhergehenden Ansprüche, wobei das zweite Skript konfiguriert ist, durch den Benutzer eingegebene Information bezüglich des Informationseingabebildschirms in der externen Vorrichtung (103) zu speichern.

5. Informationsverarbeitungsvorrichtung (101) nach einem der vorhergehenden Ansprüche, weiterhin umfassend eine zweite Bestimmungseinrichtung zum Bestimmen, ob das in der Speichereinrichtung (214) gespeicherte Skript ausgeführt wird, abhängig vom Benutzer, der gerade die Informationsverarbeitungsvorrichtung bedient.

6. Informationsverarbeitungssystem, das eine Informationsverarbeitungsvorrichtung (101) nach einem der vorhergehenden Ansprüche und eine externe Vorrichtung umfasst.

7. Verfahren zum Steuern einer Informationsverarbeitungsvorrichtung (101), die umfasst: eine Verbindungseinrichtung (218) zum Verbinden mit einem Netz (110), einen Webbrowser (404), der konfiguriert ist, Bildschirmdaten von einem Webserver (102) im Netz zu empfangen und basierend auf den Bildschirmdaten einen Bildschirm anzuzeigen, und eine Speichereinrichtung (214) zum Speichern eines Skripts, das verwendet wird zum Erfassen von in einer externen Vorrichtung (103) gespeicherter Nutzerinformation im Netz, wobei das Verfahren **gekennzeichnet ist durch**:
Bestimmen, unter Verwendung einer URL-Verwaltungstabelle, ob der **durch** den Webbrowser (404) anzuzeigende Bildschirm ein Informationseingabebildschirm zum Empfangen einer Informationseingabe von einem Benutzer ist, die zur Benutzerauthentifizierung zu verwenden ist, und Anweisen zum Laden eines Skripts unter der Bedingung, dass vom Webserver empfangene Bildschirmdaten eine URL verwenden, die zu einer in der URL-Verwaltungstabelle enthaltenen URL passt; und
Ausführen des in der Speichereinrichtung (214) gespeicherten Skripts ansprechend auf eine Bestimmung, in der als ein Ergebnis der Bestimmung der **durch** den Webbrowser (404) anzuzeigende Bildschirm der Informationseingabebildschirm ist,
wobei das Skript ein in der externen Vorrichtung gespeichertes zweites Skript erfasst, und wobei das zweite Skript für eine Autovervollständigen-Verarbeitung Benutzerinformation von der externen Vorrichtung anfordert und die Benutzerinformation auf ein Element einstellt, das in den **durch** den Webbrowser angezeigten Bildschirmdaten enthalten ist.

8. Computerprogramm, das Anweisungen umfasst, welche die Informationsverarbeitungsvorrichtung nach Anspruch 1 veranlassen, das Steuerverfahren nach Anspruch 7 auszuführen.

## Revendications

1. Appareil de traitement d'informations (101), comprenant :
un moyen de connexion (218) destiné à assurer une connexion à un réseau (110) ;
un navigateur Web (404) configuré pour recevoir des données d'écran d'un serveur Web (102) sur le réseau et pour afficher un écran sur la base des données d'écran ;
un moyen de mémorisation (214) destiné à mémoriser un script utilisé pour acquérir des informations d'utilisateur mémorisées dans un appareil externe (103) sur le réseau ;
**caractérisé par** :
un moyen de détermination (211) comprenant une table de gestion d'URL, destiné à déterminer si l'écran à afficher par le navigateur Web (404) est un écran d'entrée d'informations permettant de recevoir une entrée d'informations d'un utilisateur à utiliser à des fins d'authentification d'utilisateur, où le moyen de détermination est configuré pour ordonner au navigateur Web de charger un script à condition que les données d'écran reçues du serveur Web utilisent une URL qui correspond à une URL comprise dans la table de gestion d'URL ; et
un moyen d'exécution (405) destiné à exécuter le script mémorisé dans le moyen de mémorisation en réponse à une détermination effectuée par le moyen de détermination indiquant que l'écran à afficher par le navigateur Web (404) est l'écran d'entrée d'informations,
dans lequel le script mémorisé dans le moyen de mémorisation (214) est configuré pour acquérir un second script mémorisé dans l'appareil externe, le second script étant configuré pour demander les informations d'utilisateur à partir de l'appareil externe à des fins de traitement de saisie semi-automatique et pour paramétrer les informations d'utilisateur par rapport à un élément compris dans les données d'écran affichées par le navigateur Web.

2. Appareil de traitement d'informations (101) selon la revendication 1, dans lequel le moyen de mémorisation (214) mémorise le script utilisé pour acquérir les informations d'utilisateur mémorisées dans l'appareil externe (103) en tant que signet du navigateur Web (404).

3. Appareil de traitement d'informations (101) selon la revendication 1 ou la revendication 2, dans lequel le second script est configuré pour ajouter un objet d'affichage à l'écran d'entrée d'informations.

4. Appareil de traitement d'informations (101) selon l'une quelconque des revendications précédentes, dans lequel le second script est configuré pour mémoriser des informations entrées par l'utilisateur par rapport à l'écran d'entrée d'informations dans l'appareil externe (103).

5. Appareil de traitement d'informations (101) selon l'une quelconque des revendications précédentes, comprenant en outre un second moyen de détermination destiné à déterminer si le script mémorisé dans le moyen de mémorisation (214) est exécuté en fonction de l'utilisateur qui utilise l'appareil de traitement d'informations.

6. Système de traitement d'informations comprenant un appareil de traitement d'informations (101) selon l'une quelconque des revendications précédentes et un appareil externe.

7. Procédé de commande d'un appareil de traitement d'informations (101) comprenant un moyen de connexion (218) destiné à assurer connexion à un réseau (110), un navigateur Web (404) configuré pour recevoir des données d'écran d'un serveur Web (102) sur le réseau et pour afficher un écran sur la base des données d'écran, et un moyen de mémorisation (214) destiné à mémoriser un script utilisé pour acquérir des informations d'utilisateur mémorisées dans un appareil externe (103) sur le réseau ;
le procédé étant **caractérisé en ce qu'**il comprend les étapes consistant à :
déterminer, par l'utilisation d'une table de gestion d'URL, si l'écran à afficher par le navigateur Web (404) est un écran d'entrée d'informations permettant de recevoir une entrée d'informations d'un utilisateur à utiliser à des fins d'authentification d'utilisateur, et ordonner le chargement d'un script à condition que les données d'écran reçues du serveur Web utilisent une URL qui correspond à une URL comprise dans la table de gestion d'URL ;
exécuter le script mémorisé dans le moyen de mémorisation (214) en réponse à une détermination indiquant que l'écran à afficher par le navigateur Web (404) est l'écran d'entrée d'informations en tant que résultat de la détermination, le script acquérant un second script mémorisé dans l'appareil externe, et le second script demandant des informations d'utilisateur à partir de l'appareil externe à des fins de traitement de saisie semi-automatique et paramétrant les informations d'utilisateur par rapport à un élément compris dans les données d'écran affichées par le navigateur Web.

8. Programme informatique comprenant des instructions destinées à amener l'appareil de traitement d'informations selon la revendication 1 à exécuter le procédé de commande selon la revendication 7.
